(19) Europäisches Patentamt
European Patent Office
Office européen des brevets

(11) Publication number: **0 479 107 A2**

(12) **EUROPEAN PATENT APPLICATION**

(21) Application number: **91116316.0**

(22) Date of filing: **25.09.91**

(51) Int. Cl.5: **C08G 64/08**, C08G 64/14

(30) Priority: **05.10.90 US 597463**

(43) Date of publication of application: **08.04.92 Bulletin 92/15**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **Hawkins, Christopher Michael**
**1110 Union Street**
**Schenectady, New York 12308(US)**
Inventor: **Bostick, Edgar Earl**
**57 Park Ridge Drive**
**Mount Vernon, Indiana 47620(US)**
Inventor: **DeRudder, James Louis**
**1622 Raintree Drive**
**Mount Vernon, Indiana 47620(US)**

(74) Representative: **Catherine, Alain**
**General Electric France Service de Propriété Industrielle 18 Rue Horace Vernet**
**F-92136 Issy-Les-Moulineaux Cedex(FR)**

# (54) Silane esters modified polycarbonates.

(57) Hydroxyl-terminated polycarbonate resins are transesterified with silane esters to obtain end-capped, extended or branched polycarbonate molding compositions.

EP 0 479 107 A2

## Field of The Invention

The invention relates to polycarbonate resins and more particularly to polycarbonate resins end-capped, extended or branched with silane esters.

## Brief Description of the Prior Art

Aromatic polycarbonate resins are a well-known class of synthetic polymeric resins, generally prepared by the reaction of a polyhydric phenol with a carbonate precursor; see for example U.S. Patent 3,989,672. Although such polycarbonate resins have been found to be thermoplastically moldable under a broad range of molding conditions, some polycarbonate resin compositions are not suitable for use in all desired applications because they inherently lack certain desired physical properties such as a particular intrinsic viscosity, weight average molecular weight range and like properties. The present invention provides a means for controlling molecular weights and intrinsic viscosities, while minimizing affects on other desired properties of the basic polycarbonate resin. Thus, by the means of the present invention polycarbonate resin chains can be terminated, extended and/or branched to control molecular weights and intrinsic viscosities.

## SUMMARY OF THE INVENTION

The invention comprises an aromatic polycarbonate resin, end-capped with a monovalent moiety of the formula:-

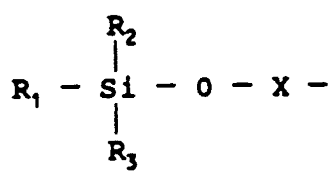

(I)

wherein $R_1$, $R_2$ and $R_3$ are each independently selected from the group consisting of hydrocarbyl, halogen-substituted hydrocarbyl and hydrocarbyloxy; and X represents a divalent organic radical, the residue of a hydroxyl group containing polycarbonate end-cap moiety following transesterification of a compound of the formula:-

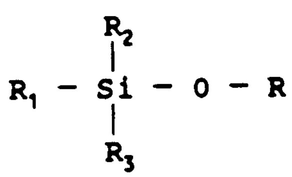

(II)

wherein, $R_1$, $R_2$ and $R_3$ are as defined above and R represents hydrocarbyl.

The term "hydrocarbyl" as used herein means the monovalent moiety obtained upon removal of a hydrogen atom from a parent hydrocarbon. Representative of hydrocarbyl are alkyl of 1 to 25 carbon atoms, inclusive, such as methyl, ethyl, propyl, butyl, pentyl, hexyl, heptyl, octyl, nonyl, undecyl, decyl, dodecyl, octadecyl, nonodecyl, eicosyl, heneicosyl, docosyl, tricosyl, tetracosyl, pentacosyl and the isomeric forms thereof; aryl of 6 to 25 carbon atoms, inclusive, such as phenyl, tolyl, xylyl, naphthyl, biphenyl, tetraphenyl and the like; aralkyl of 7 to 25 carbon atoms, inclusive, such as benzyl, phenethyl, phenpropyl, phenbutyl, phenhexyl, napthoctyl and the like; cycloalkyl of 3 to 8 carbon atoms, inclusive, such as cyclopropyl, cylobutyl, cyclopentyl, cyclohexyl, cycloheptyl, cyclooctyl and the like; alkenyl of 2 to 25 carbon atoms, inclusive, such as vinyl, allyl, butenyl, pentenyl, hexenyl, octenyl, nonenyl, decenyl, undececyl, dodecenyl, tridecenyl, pentadecenyl, octadecenyl, pentacosynyl and isomeric forms thereof.

The term "halogen-substituted hydrocarbyl" means hydrocarbyl as defined above, wherein one or more hydrogen atoms have been replaced with a halogen atom.

The term "halogen" is used herein in its conventionally accepted sense as embracive of chlorine, bromine and iodine.

The term "hydrocarbyloxy" means the monovalent moiety of formula:

- 0 - hydrocarbyl

wherein "hydrocarbyl" is as defined above.

The aromatic polycarbonate resins of the invention, end-capped with the monovalent moieties of the formula (I) given above have a wide variety of uses. For example, those resins wherein $R_1$, $R_2$ and $R_3$ are such that they lack a transesterification reactive group, i.e.; a group that will participate in a transesterification reaction are useful as thermoplastically moldable resins. The termination of a hydroxyl-terminated polycarbonate with a moiety of the formula (I) wherein $R_1$, $R_2$ and $R_3$ are inert to further reactions deactivates the polymer to further reaction, thus stabilizing the polymer. The resins of the invention wherein at least one of $R_1$, $R_2$ and $R_3$ include a transesterification reactive group (such as, for example, a hydroxyl or an alkoxy group) are useful as polycarbonate resin chain-extenders. The resins of the invention wherein at least 2 of $R_1$, $R_2$ and $R_3$ are groups containing transesterification reactive functional groups are useful branching agents for the preparation of branched polycarbonate resins. These and other uses for the resins of the invention will be described in more detail below.

The invention also comprises the chain extended and branched polycarbonate resins prepared using the above-described intermediate resins.

DETAILED DESCRIPTION OF THE PREFERRED EMBODIMENTS OF THE INVENTION

The end-capped, aromatic polycarbonate resins of the invention may be prepared by transesterifying a silane ester of the formula (II) given above with a hydroxyl-terminated polycarbonate of the formula:

POLYCARBONATE $-(-O-X-OH)_n$ (III)

wherein X is as previously defined and n is an integer of 1-2.

Hydroxyl terminated polycarbonate resins (III) and their method of preparation are described in U.S. Patent 4,732,934 (Pyles, Longely and Hathaway, March 22, 1988), incorporated herein by reference thereto. The method of preparation entails the use of a mono protected bishydroxyl compound such as shown in the formula:

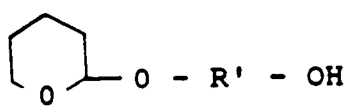

wherein R' represents alkylene or arylene, as the chain terminating agent in the preparation of the resins, followed by removal of the protecting group to generate a hydroxyl-terminated polycarbonate resin.

Another method of preparing hydroxyl-terminated polycarbonate resins of the formula (III) is described in the U.S. patent 4,814,421 (Rosenquist, March 21, 1989) which is incorporated herein by reference thereto. According to the method described by Rosenquist, aromatic polycarbonate resins having polymer chains terminated with a hydroxyl group are prepared by reacting a dihydric phenol with a carbonyl halide under interfacial polymerization conditions, in the presence of a molecular weight controlling proportion of a dihydric ester.

In general, the method of interfacial polymerization comprises the reaction of a dihydric phenol with a carbonyl halide (the carbonate precursor).

Although the reaction conditions of the preparative processes may vary, several of the preferred processes typically involve dissolving or dispersing the diphenol reactants in aqueous caustic, adding the resulting mixture to a suitable water immiscible solvent medium and contacting the reactants with the carbonate precursor, such as phosgene, in the presence of a suitable catalyst and under controlled pH conditions. The most commonly used water immiscible solvents include methylene chloride, 1,1-dichloroethane, chlorobenzene, toluene, and the like.

The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like. The preferred process for preparing polycarbonate resins of the invention comprises a phosgenation reaction.

The temperature at which the phosgenation reaction proceeds may vary from below 0 ° C, to above 100 ° C. The phosgenation reaction preferably proceeds at temperatures of from room temperatures (25 ° C) to 50 ° C. Since the reaction is exothermic, the rate of phosgene addition may be used to control the reaction temperature. The amount of phosgene required will generally depend upon the amount of the dihydric phenol and the amount of any dicarboxylic acid also present.

Dihydric phenol reactants employed to prepare the polycarbonate resins of the invention are generally well known compounds as are methods of their preparation. Representative of such dihydric phenols are phenolic diols of the general formula:-

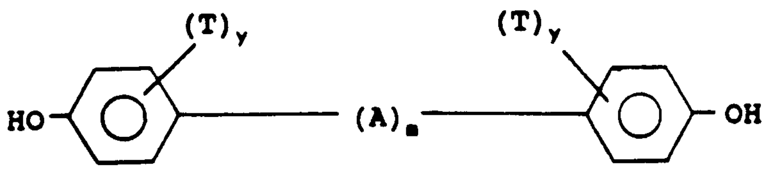

(IV)

wherein A is selected from the group consisting of a divalent hydrocarbon radical containing from 1 to about 15 carbon atoms; a halogen substituted divalent hydrocarbon radical containing from 1 to about 15 carbon atoms and divalent groups such as:

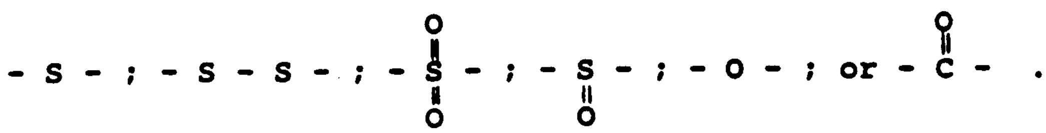

Each T in formula (IV) is independently selected from the group consisting of halogen, hydrocarbyl such as an alkyl group of from 1 to about 8 carbon atoms; an aryl group of from 6-18 carbon atoms, an aralkyl group of from 7 to about 14 carbon atoms, an oxyalkyl group of from 1 to about 8 carbon atoms, and an oxyaryl group of from 6 to 19 carbon atoms; wherein m is zero or 1 and y is a whole number integer of from 0 to 4, inclusive.

Typical of some of the dihydric phenols that are advantageously employed are bis-phenols such as bis-(4-hydroxyphenyl) methane, 2,2-bis(4-hydroxy-3-methylphenyl)propane, 4,4-bis(4-hydroxyphenyl)heptane, 2,2-bis(4-hydroxy-3,5-dichlorophenyl)propane, 2,2-bis(4-hydroxy-3,5-dibromophenyl)propane, dihydric phenyl ethers such as bis(4-hydroxphenyl)ether, bis(3,5-dichloro-4-hydroxyphenyl)ether; dihydroxybiphenols such as p,p'-dihydroxybiphenol, 3,3'-dichloro-4,4'-dihydroxybiphenyl; dihydroxyaryl sulfones such as bis(4-hydroxyphenyl) sulfone, bis(3,5-dimethyl-4-hydroxyphenyl)sulfone; dihydroxy benzenes such as resorcinol and hydroquinone; halo-and alkyl-substituted dihydroxy benzenes such as 1,4-dihydroxy-2,5-dichlorobenzene, 1,4-dihydroxy-3-methylbenzene; and dihydroxy diphenyl sulfides and sulfoxides such as bis(4-hydroxyphenyl)sulfide and bis(4-hydroxyphenyl)sulfoxide. A variety of additional dihydric phenols are also available and are disclosed in U.S. Pat. Nos. 2,999,835; 3,028,365 and 3,153,008, all of which are incorporated herein by reference. It is, of course, possible to employ two or more different dihydric phenols or a combination of a dihydric phenol with a glycol.

Preferred dihydric phenols of Formula (IV) are the 4,4'-bisphenols.

The carbonate precursor employed in the preparation of resins of the present invention may be a carbonyl halide, a diarylcarbonate, or a bishaloformate. The carbonyl halides include carbonyl bromide, carbonyl chloride, and mixtures thereof. The bishaloformates include the bishaloformates of dihydric phenols such as bishaloformates of 2,3-bis(4-hydroxyphenyl)propane, hydroquinone, and the like; or the bischloroformates of glycols such as the bischloroformates of ethylene glycol, neopentylene, glycol, polyethylene glycol, and the like. Typical of the diarylcarbonates which may be employed are diphenyl carbonate, and the di(alkylphenyl)-carbonates such as di(tolyl) carbonate. Some other non-limiting illustrative examples of suitable diarylcarbonates include di(naphthyl)carbonate, phenyl tolyl carbonate, and the like.

The preferred carbonate precursors are the carbonyl halides, with carbonyl chloride, also known as phosgene, being the preferred carbonyl halide.

The term "polycarbonate" as used herein is inclusive of copolyester-polycarbonates, i.e.; resins which

contain, in addition to recurring polycarbonate chain units of the formula:-

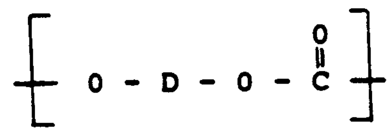

wherein D is a divalent aromatic radical of the dihydric phenol employed in the polymerization reaction, repeating or recurring carboxylate units, for example of the formula:

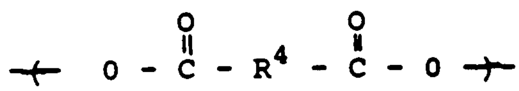

wherein $R^4$ is as defined below.

The copolyester-polycarbonate resins are also prepared by interfacial polymerization technique, well known to those skilled in the art; see for example the U.S. patents 3,169,121 and 4,487,896.

In general the coplyester-polycarbonate resins are prepared as described above for the preparation of polycarbonate homopolymers, but by added presence of a difunctional carboxylic acid (ester precursor) in the water immiscible solvent.

In general, any difunctional carboxylic acid (dicarboxylic acid) conventionally used in the preparation of linear polyesters may be utilized in the preparation of the copolyester-carbonate resins of the instant invention. Generally, the difunctional carboxylic acids which may be utilized include the aliphatic carboxylic acids, the aromatic carboxylic acids, and the aliphatic-aromatic carboxylic acids. These acids are well known and are disclosed for example in U.S. Pat. NO. 3,169,121, which is hereby incorporated herein by reference. Representative of such difunctional carboxylic acids are difunctional carboxylic acids of the formula:-

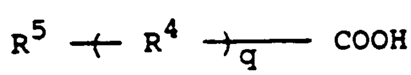

(V)

wherein $R^4$ is an alkylene, alkylidene, or cyclo-aliphatic group; an alkylene, alkylidene or cyclo-aliphatic group containing ethylenic unsaturation; an aromatic group such as phenylene, biphenylene, and the like; two or more aromatic groups connected through non-aromatic linkages such as alkylene or alkylidene groups; and a divalent aralkyl radical such as tolylene, xylylene, and the like. $R^5$ is either a carboxyl or a hydroxyl group. The letter q represents the integer one where $R^5$ is a hydroxyl group and either zero or one where $R^5$ is a carboxyl group.

Conveniently available aromatic dicarboxylic acids are those represented by the general formula:

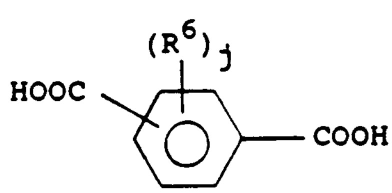

(VI)

wherein j is a positive whole integer having a value of from 0 to 4 inclusive; and each $R^6$ is independently selected from the group consisting of alkyl radicals, preferably lower alkyl radicals (containing from 1 to about 5 carbon atoms).

Mixtures of these difunctional carboxylic acids may be employed as well as single acids. Therefore, where the term "difunctional carboxylic acid" or "dicarboxylic acid" is used herein it is to be understood that the terms include mixtures of two or more different difunctional carboxylic acids as well as individual carboxylic acids.

Most preferred as aromatic dicarboxylic acids are isophthalic acid, terephthalic acid, and mixtures thereof. A particularly useful difunctional carboxylic acid comprises a mixture of isophthalic acid and terephthalic acid wherein the weight ratio of terephthalic acid to isophthalic acid is in the range of from about 10:1 to about 0.2:9.8.

Rather than utilizing the difunctional carboxylic acid per se, it is possible, sometimes even preferred, to employ the reactive derivatives of said acid. Illustrative of these reactive derivatives are the acid halides. The preferred acid halides are the acid dichlorides and the acid dibromides. Thus, for example, instead of using isophthalic acid, terephthalic acid or mixtures thereof, it is possible to employ isophthaloyl dichloride, terephthaloyl dichloride, and mixtures thereof.

The proportions of reactants employed to prepare the copolyeser-carbonate resins of the invention will vary in accordance with the proposed use of the product resin. Those skilled in the art are aware of useful proportions, as described in the U.S. patents referred to above. In general, the amount of the ester bonds may be from about 5 to about 90 mole percent, preferably from about 35 to about 80 mole percent, relative to the carbonate bonds. For example, 5 moles of bisphenol-A reacting completely with 4 moles of isophthaloyl dichloride and 1 mole of phosgene would give a copolyester-carbonate of 80 mole percent ester bonds.

Also included within the scope of the instant invention are randomly branched hydroxyl-terminated polycarbonate resins wherein a minor amount (typically between 0.05 and 2 mole percent, based on the quantity of dihydric phenol used) of a polyfunctional aromatic compound is a co-reactant with the dihydric phenol in the reaction mixture, comprising also the carbonate precursor and optionally the ester precursor; to provide a thermoplastic randomly branched polycarbonate. These polyfunctional aromatic compounds may be hydroxyl, carboxyl, carboxylic anhydride, haloformyl, or mixtures thereof. Some illustrative non-limiting examples of these polyfunctional compounds include trimellitic anhydride, trimellitic acid, trimellityl trichloride, 4-chloroformyl phthalic anhydride, pyromellitic acid, pyromellitic dianhydride, mellitic acid, mellitic anyhdride, trimesic acid, benzophenonetetracarboxylic acid, benzophenonetetracarboxylic acid anhydride, and the like. Other organic polyfunctional compounds useful in making randomly branched polycarbonates are disclosed in U.S. Pat. Nos. 3,635,895 and 4,001,184, both of which are incorporated herein by reference.

In the conventional interfacial polymerization methods of preparing polycarbonates, a molecular weight regulator (a chain stopper) is generally added to the reaction mixture prior to or during the contacting with a carbonate precursor. Useful molecular weight regulators include, but are not limited to, monohydric phenols such as phenol, chroman-I, paratertiarybutylphenyl, p-cumylphenol and the like. Techniques for the control of molecular weight are well known in the art and are used for controlling the weight average molecular weight of the resins of the present invention.

The Rosenquist method of preparing hydroxyl-terminated polycarbonate resins of formula (III) given above departs from the conventional interfacial polymerization methods for preparing polycarbonates by the use of, as the sole chain stopper, or in combination with one or more of the aforementioned known chain stoppers, a phenoxy ester compound having a hydroxyl group. The hydroxyl group, attached directly to the phenyl ring, is the hydroxyl group which reacts to end cap the resin chain, leaving an aliphatic ester group unreacted and free for further reactions; see U.S. Patent 4,814,421. In this case, X in the formula (III) given above is phenylene.

The hydroxyl-terminated polycarbonate resins may also be prepared by the method described in U.S. patent 4,550,155 (Jones et al) which is incorporated herein by reference thereto. In general, the method comprises transesterifying an aromatic bisphenol and a diaryl carbonate in the presence of a tricarboxylic acid.

The silane esters of the formula (II) set forth above are well known compounds as are methods of their preparation. For example, they may be prepared by any of the methods described in the U.S. patents 2,967,171; 2,995,590; 3,215,719; 3,846,463; 3,912,774; 4,060,538; and 4,717,773, all of which are incorporated herein by reference thereto.

Those compounds of the formula (II) wherein $R_1$, $R_2$ and $R_3$ each independently represent or hydrocarbyl, or halogen-substituted hydrocarbyl, i.e.; monovalent groups which are inert under transesterification reaction conditions described herein, are represented by methoxytridecoxysilane, phenoxytrimethylsilane, ethoxytripropylsilane, phenoxytriphenylsilane and the like.

Those compounds of the formula (II) given above wherein one of $R_1$, $R_2$ and $R_3$ is a hydrocarbyloxy group are represented by dimethyldiethoxysilane, dimethyldiphenoxylsilane dimethyldiphenoxysilane and the like.

Those compounds of the formula (II) given above wherein two of $R_1$, $R_2$ and $R_3$ are hydrocarbyloxy groups are represented by methyltrimethoxysilane, methyltriphenoxysilane, phenyltriphenoxysilane, vinyltriphenoxysilane, cyanotriphenoxysilane and the like.

Those compounds of the formula (II) given above wherein each of $R_1$, $R_2$ and $R_3$ represent hydrocarbyloxy are represented by tetraphenoxysilane, tetra(2-ethyl- butoxy)silane, tetrakis(2-methoxyethoxy) silane, tetracyclohexoxysilane, bis(geranioxy) diethoxysilane and the like.

Transesterification between the hydroxyl-terminated polycarbonate and the compound of formula (II) given above may be carried out by melt-blending the two reactants. In general, the transesterification is advantageouslycarried out in a melt extruder. The reaction occurs in a matter of minutes.

The proportion of compound (II) added to the reaction mixture is generally within the range of from 0.1 to 3.0 mole percent of the polycarbonate resin reactant.

Those skilled in the art will appreciate from the description given above, that embodiment polycarbonate resins of the present invention may be represented by the schematic formula:-

$$R_1 - \underset{\underset{\displaystyle R_3}{|}}{\overset{\overset{\displaystyle R_2}{|}}{\mathrm{Si}}} - OX - O \sim \mathrm{Polycarbonate} \sim O - XO - \underset{\underset{\displaystyle R_3}{|}}{\overset{\overset{\displaystyle R_2}{|}}{\mathrm{Si}}} - R_1 \qquad \mathrm{(VII)}$$

wherein $R_1$, $R_2$, $R_3$ and X have the meanings previously ascribed to them.

The endcapped polyester resins of formula (VII) wherein $R_1$, $R_2$ and $R_3$ are not reactive, functional groups are deactivated (non-functionalized) polyesters useful as chemically inert components of molding compositions. Being free of the normally present hydroxyl or carboxyl-terminal groups they are compatible with a broad variety of additives usually employed to formulate thermoplastic molding agents, described hereinafter.

The endcapped polyester resins of formula (VII) wherein one of $R_1$, $R_2$ and $R_3$ is a group amenable to transesterification (as previously described), are useful intermediates in the preparation of chain extended polycarbonates, i.e.; an extended polycarbonate of the schematic formula:

$$- \mathrm{POLYCARBONATE} - O - XO - \underset{\underset{\displaystyle R_3}{|}}{\overset{\overset{\displaystyle R_2}{|}}{\mathrm{Si}}} - OX - O - \mathrm{POLYCARBONATE} \sim \qquad \mathrm{VIII)}$$

wherein $R_2$ and $R_3$ have the same meanings previously ascribed to them and the terminal valences on the polycarbonate segments are satisfied by a hydroxyl group, a monovalent moiety of the formula (I) given above or is joined to one or more additional polyester segments through further extensions through the moiety (I). The extended resins (VIII) are useful linear polyesters of relatively high weight average molecular weights and intrinsic viscosities, for use in thermoplastic molding of articles which require high molecular weight linear polyesters.

The endcapped polyester resins of formula (VII) wherein at least two or three of $R_1$, $R_2$ and $R_3$ are groups amenable to transesterification reaction as described above, are useful intermediates in the preparation of highly branched polyesters. These branched polyesters may be represented by the schematic formulae:

$$\sim \mathrm{POLYCARBONATE} - O - XO - \underset{\underset{\displaystyle OX - O - \mathrm{POLYCARBONATE} \sim}{|}}{\overset{\overset{\displaystyle R_2}{|}}{\mathrm{Si}}} - OX - O - \mathrm{POLYCARBONATE} \sim \qquad \mathrm{(IX)}$$

or

```
                                    OX - O - POLYCARBONATE -
                                    |
- POLYCARBONATE - O - XO - Si - OX - O - POLYCARBONATE-
                                    |
                                    OX - O - POLYCARBONATE -
                                                          (X)
```

wherein $R_2$ is as defined previously and the terminal valence on each polycarbonate segment is satisfied by a hydroxyl group, a monovalent moiety of the formula (I) given above or is joined to one or more additional polyester segments through further branching through the moiety (I). The branched polyesters (IX) and (X) are useful in blow molding relatively thin articles, such as automotive parts and the like.

Those skilled in the art will appreciate that during a given transesterification reaction between a hydroxyl-terminated polycarbonate and a silane ester (II) as described above, the product resin will be a mixture of resin chains of the formulae (VII), (VIII) and (X) given above, together perhaps with unreacted polycarbonate and silane ester (II) depending on the proportions of reactants, temperatures and reaction times permitted. If desired, the mixture of products may be separated by conventional methods based on the differences in molecular weights. However, the crude mixtures themselves are useful for many purposes, based on their weight average molecular weights and intrinsic viscosities.

The preferred polycarbonate resins of the invention described above may have a weight average molecular weight ($M_w$) of from about 2,000 to about 200,000, preferably from about 30,000 to about 150,000 and an intrinsic viscosity, as measured in methylene chloride at 25°C., of at least about 0.3 dℓ/gm, preferably from about 0.45 to about 1.40 dℓ/gm. Molecular weights may be determined by known methods such as by gel permeation chromatography.

Thermoplastic molding resin compositions of the instant invention containing polymers of the formula (VII) may additionally comprise admixtures with various commonly known and used additives such as, for example, antioxidants; antistatic agents; inert fillers such as glass, talc, mica and clay; ultraviolet radiation absorbers such as the benzophenones, benzotriazoles, and the like; hydrolytic stabilizers such as the epoxides disclosed in U.S. Pat. Nos. 3,489,716, 4,138,379 and 3,839,247, all of which are incorporated herein by reference; impact modifiers; mold release agents; color stabilizers such as the organophosphites; and flame retardants including a wide variety of alkali and alkaline earth metal salts of sulfonic acids. The latter flame retardants are disclosed in U.S. Pat. Nos. 3,933,734, 3,931,100, 3,978,024, 3,948,851, 3,926,980, 3,919,167, 3,909,490, 3,953,396, 3,953,300, 3,917,559, 3,951,910 and 3,940,366, all of which are incorporated herein by reference.

The production of the molding compositions of the invention may be accomplished by blending the components using any of the blending means known for blending of thermoplastics, such as blending in a kneading machine (such as a Banbury mixer, Werner Pfleiderer blender, or in an extruder, or by means of a roll mill). The sequence of addition is not critical but the components should be thoroughly blended together.

The compounded molding compositions of the invention may be extruded and cut up, if so desired, into granules, pellets, and the like by known techniques. The further processing of the compounded molding compositions can be carried out by conventional molding or extrusion processes well known in the art.

The following examples and preparations describe the manner and process of making and using the invention and set forth the best mode contemplated by the inventor of carrying out the invention but are not to be construed as limiting the invention. Where reported, the following tests were carried out:

Intrinsic Viscosity

The intrinsic viscosity was measured at a temperature of 25°C in methylene chloride and is reported in deciliters/gram (dl/g).

EXAMPLE 1

A quantity of hydroxyl-terminated polycarbonate resin prepared by the reaction of bisphenol A and

phosgene, endcapped with 19 mole percent phenol and 81 mole percent bisphenol A (having an I.V. of 0.50) was dried for 4 hours at 110 °C and added to the HBI system 90 Haake Buchler extruder, one minute after each run began (rotor speed of 150 rpm). Five runs were made. In four runs, ten minutes after the polycarbonate addition, various proportions of tetraphenoxysilane (TPS) were added. The TPS proportions, torque conditions resulting and extruder temperature are all set forth in the TABLE, below.

TABLE

| Sample # | Added TPS (g) | Torque (Mg) at 11 minutes (immediately before addition) of TPS | Maximum torque (Mg) Developed | Time of maximum torque (min) | torque increase (%) | Extruder Temper-ture (°C) |
|---|---|---|---|---|---|---|
| 1 | 0.0 (control) | 518 | 518 | 11 | 0 | 280 |
| 2 | 0.56 | 554 | 642 | 30 | 16 | 280 |
| 3 | 0.71 | 585 | 663 | 34 | 13 | 280 |
| 4 | 0.56 | 1231 | 1655 | 41 | 34 | 265 |
| 5 | 0.56 | 554 | 642 | 30 | 16 | 310 |

## Claims

**1.** A resin which comprises an aromatic polycarbonate resin, end-capped with a monovalent moiety of the formula:-

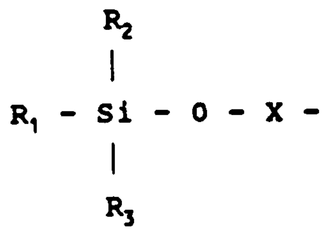

wherein $R_1$, $R_2$ and $R_3$ are each independently selected from the group consisting of hydrocarbyl, halogen-substituted hydrocarbyl and hydrocarbyloxy; and X represents a divalent organic radical.

**2.** A resin which comprises an aromatic polycarbonate resin, end-capped with a monovalent moiety of the formula:-

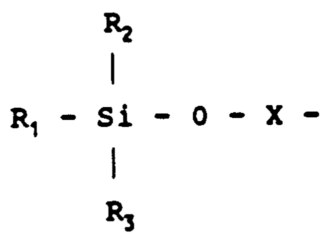

wherein $R_1$, $R_2$ and $R_3$ are each independently selected from the group consisting of hydrocarbyl, halogen-substituted hydrocarbyl and hydrocarbyloxy; and X represents a divalent organic radical, the residue of a hydroxyl group containing polycarbonate end-cap moiety following transesterification with a compound of the formula:-

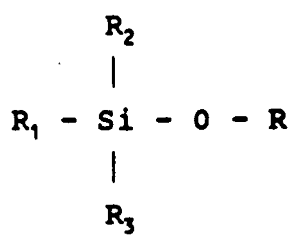

wherein, $R_1$, $R_2$ and $R_3$ are as defined above and R represents hydrocarbyl.

**3.** The resin of claim 2 wherein one of $R_1$, $R_2$ and $R_3$ is hydrocarbyloxy.

**4.** The resin of Claim 2 wherein two of $R_1$, $R_2$ and $R_3$ are hydrocarbyloxy.

**5.** The resin of Claim 2 wherein each of $R_1$, $R_2$ and $R_3$ are hydrocarbyloxy.

**6.** The resin of Claim 2 wherein the compound is tetraphenoxysilane.

**7.** The resin of Claim 2 having the formula:

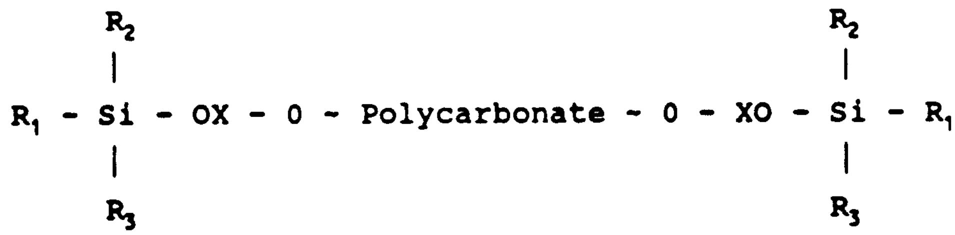

wherein $R_1$, $R_2$ and $R_3$ are each independently selected from the group consisting of hydrocarbyl, halogen-substituted hydrocarbyl and hydrocarbyloxy; and X represents a divalent organic radical.

**8.** A chain extended polycarbonate of the general formula:

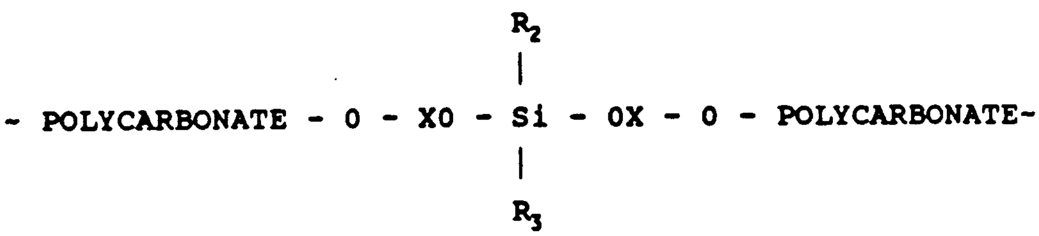

wherein each $R_2$ and $R_3$ is independently selected from the group consisting of hydrogen, hydrocarbyl, halogen-substituted hydrocarbyl and hydrocarbyloxy; X represents a divalent organic radical; and the unsatisfied polycarbonate valence is satisfied with a hydroxyl group, a monovalent moiety of the formula (I) or additional polyester segments through further extensions through the moiety (I).

**9.** A method of preparing a branched polycarbonate, which comprises;
polymerizing an aromatic dihydric phenol by transesterification with a diaryl carbonate in the presence of from about 0.01 to about 1.0 mole percent based on the moles of aromatic dihydric phenol, of a branching agent of the formula:

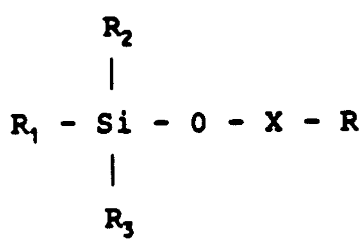

wherein $R_1$, $R_2$ and $R_3$ are each independently selected from the group consisting of hydrocarbyl, halogen-substituted hydrocarbyl and hydrocarbyloxy; and R represents hydrocarbyl.

**10.** The method of claim 9 wherein the dihydric phenol is selected from those of the formula:

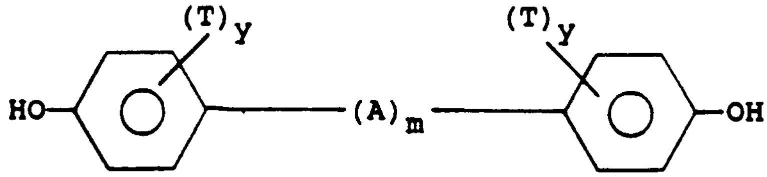

wherein A is selected from the group consisting of a divalent hydrocarbon radical containing from 1 to about 15 carbon atoms; a halogen substituted divalent hydrocarbon radical containing from 1 to about 15 carbon atoms and divalent groups of formulae:

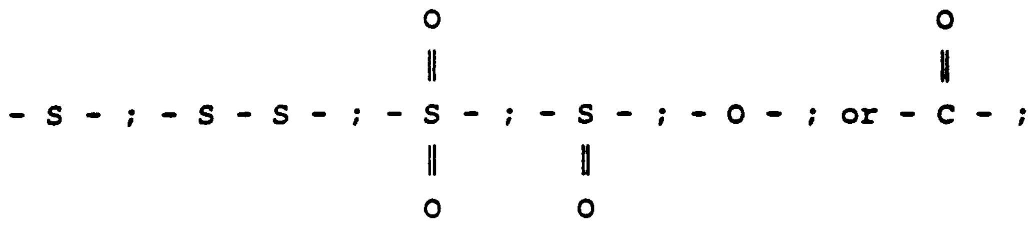

and wherein each T is independently selected from the group consisting of halogen, hydrocarbyl, oxyalkyl or oxyaryl and wherein m is zero or 1 and y is a whole number integer of from 0 to 4, inclusive.

**11.** The method of Claim 10 wherein the diaryl carbonate is phosgene diphenyl carbonate.

**12.** The branched resin product of the method of claim 9.

**13.** A branched polyester of a general formula selected from

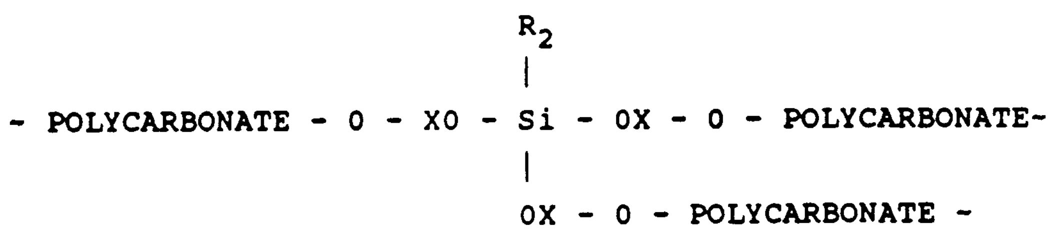

and

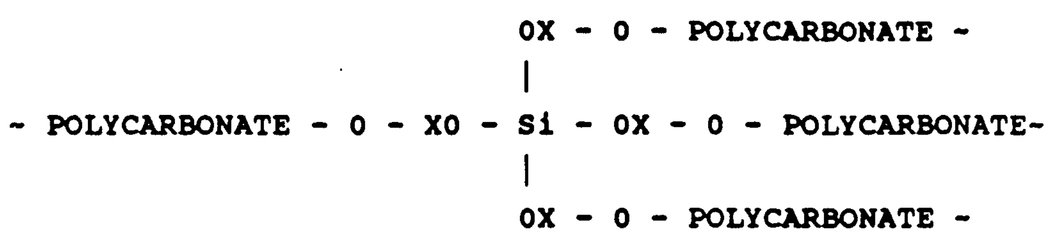

wherein $R_2$ is selected from the group consisting of hydrocarbyl, halogen-substituted hydrocarbyl and hydrocarbyloxy; X represents a divalent organic radical; and the unsatisfied polycarbonate valence is satisfied with a hydroxyl group, a monovalent moiety of the formula (I) or additional polyester segments through further branching through the moiety (I).

**14.** A thermoplastic resin composition which comprises the transesterification product of a hydroxyl-terminated polycarbonate and a silane ester of the formula:

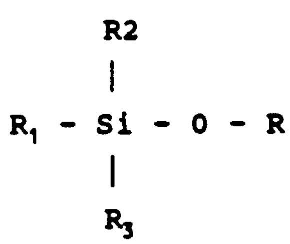

(II)

wherein $R_1$, $R_2$ and $R_3$ are each independently selected from the group consisting of hydrocarbyl, halogen-substituted hydrocarbyl and hydrocarbyloxy; and R represents hydrocarbyl.

**15.** The product of claim 14 wherein R, $R_1$, $R_2$ and $R_3$ are each phenoxy.